# EUROPEAN PATENT SPECIFICATION

(11) **EP 4 505 103 B1**
(45) Date of publication and mention of the grant of the patent: **18.11.2026**
(21) Application number: 22722087.8
(22) Date of filing: 05.04.2022
(51) Int. Cl.: F16L 37/12, F16L 41/03

(54) **FLUID CONNECTION ASSEMBLY**
FLUIDVERBINDUNGSBAUGRUPPE
ENSEMBLE DE RACCORDEMENT DE FLUIDE

(43) Date of publication of application: 12.02.2025
(73) Proprietor: Oetiker NY, Inc., Lancaster NY 14086 (US)
(72) Inventor: HAGEN, Kristian James, New York 14067 (US); SAUSEN, Kari Ann, New York 14031 (US); ZILLIG, Ryan, Williamsville, New York 14221 (US)
(74) Representative: Strehl & Partner mbB
(86) International application number: PCT/US2022/071547
(87) International publication number: WO 2023/196021

(56) References cited:
- CN-A- 104 884 853
- CN-A- 113 738 983
- US-A1- 2008 111 376
- US-A1- 2019 331 275
- US-B2- 10 221 976

## Description

### FIELD

The present disclosure relates to fluid connectors, and more particularly, to a fluid connection assembly for a refrigeration system including a retainer that decreases the insertion force required for assembly and allows for quick assembly without the need for tools.

### BACKGROUND

Fluid connectors, fluid connections, and fluid connection assemblies are integral components for many applications, and especially for automotive and industrial applications. Since refrigeration systems are made up of various components such as a compressor, air cooler, condenser, receiver, evaporator or chiller, and/or suction drum, fluid must be able to travel not only within each component but also between components. Fluid predominantly moves between components via flexible or rigid hoses which connect to each component by fluid connectors. Such fluid connectors typically include a retaining clip, retaining ring clip, or snap ring carried on the connector body which is adapted to snap behind a raised shoulder of a tube when the tube is fully inserted into the connector body. However, in order for the fluid connector to properly function, slots or apertures must be machined in the connector body such that the retaining clip can protrude therethrough and engage the tube, which requires extra post-process manufacturing. During the assembly process, installation of the retaining clip onto the connector body is difficult and failure to install the retaining clip properly can jeopardize the structural integrity of the retaining clip. Additionally, the force required to engage the tube into the connector body, and overcome the radial force of the retaining clip, is very large with current designs. Also, since the retaining clips are very thin and small, it is easy to lose them if dropped or misplaced. Furthermore, some connection assembly solutions take a long time to secure and require tools for the assembly process. Moreover, current connection assembly solutions do not indicate the connection state of the assembly.

Thus, there has been a long-felt need for a fluid connection assembly for a refrigeration system including a retainer that allows for disassembly, eliminates the need for post-process machining, and reduces the insertion force required to assemble the fluid connector.

A fluid connection device with the features in the pre-characterizing portion of Claim 1 is disclosed in US 2008/111376 A1. Further fluid connections related to the one of the present invention are disclosed in US 10 221 976 B2, US 2019/331275 A1 and CN 104 884 853 A.

### SUMMARY

The fluid connection assembly of the present invention is defined in Claim 1. Further advantageous features are set out in the dependent claims.

In some embodiments, the first port and the second port are concentrically aligned. In some embodiments, the third port and the fourth port are concentrically aligned. In some embodiments, at least one of the second section and the connector body are arranged perpendicular to the first section. The first radially inward facing surface comprises at least one annual groove. In some embodiments, the at least one annular groove comprises a first annular groove, and a second annular groove spaced apart in an axial direction from the first annular groove. In some embodiments, a seal is arranged in the at least one annular groove. In some embodiments, the fluid connection assembly further comprises a flange fixedly secured to the first section proximate the second port. In some embodiments, at least one of the first section and the second section comprises radially outward facing threading.

The fluid connection assembly further comprises a retainer, the retainer including a third end operatively arranged to be removably connectable to the connector body, a fourth end, a first section, a second section displaceable with respect to the first section, a second radially inward facing surface, and a second radially outward facing surface. In some embodiments, the second radially inward facing surface comprises a first flange extending radially inward proximate the third end, and a second flange extending radially inward proximate the fourth end. In some embodiments, the first flange comprises a first diameter the second flange comprises a second diameter, and the first diameter is greater than the second diameter.

There is provided a fluid connection assembly, comprising a service valve body, including a first section forming a first port and a second port, a second section connected to the first section and forming a third port, a connector body forming a fourth port and comprising a first end connected to the first section, a second end, a first radially outward facing surface comprising an annular groove, and a first radially inward facing surface, and a retainer, including a third end operatively arranged to be removably connectable to the connector body, a fourth end, a first section, a second section displaceable with respect to the first section, a second radially inward facing surface, and a second radially outward facing surface.

The first radially inward facing surface comprises at least one annual groove. In some embodiments, the at least one annular groove comprises a first annular groove, and a second annular groove spaced apart in an axial direction from the first annular groove. In some embodiments, a seal is arranged in the at least one annular groove. In some embodiments, the fluid connection assembly further comprises a flange fixedly secured to the first section proximate the second port. According to the invention, the second radially inward facing surface comprises a first flange extending radially inward proximate the third end and operatively arranged to engage the annular groove, and a second flange extending radially inward proximate the fourth end. In some embodiments, the first flange comprises a first diameter, the second flange comprises a second diameter, and the first diameter is greater than the second diameter. In some embodiments, the fluid connection assembly further comprises a tube including a shoulder, wherein the second flange is operatively arranged to engage the shoulder to secure the tube in the connector body.

According to aspects illustrated herein, there is provided an integrated service port quick connect that improves the ease of connection for industrial refrigerant applications, as well as eliminates the need for braze or solder joints. The present disclosure reduces the potential for operator induced quality failures and/or leaks, and the amount of time to connect a system.

The service port of the present disclosure comprises a quick connect integrated therein. The quick connect comprises one or more O-rings and a flange to receive a plastic retainer. The tube bead abuts to the quick connect flange and the retainer closes in on the bead and the quick

These and other objects, features, and advantages of the present disclosure will become readily apparent upon a review of the following detailed description of the disclosure, in view of the drawings and appended claims.

### BRIEF DESCRIPTION OF THE DRAWINGS

Various embodiments are disclosed, by way of example only, with reference to the accompanying schematic drawings in which corresponding reference symbols indicate corresponding parts, in which:
Figure 1A is a front perspective view of a fluid connection assembly;
Figure 1B is a rear perspective view of the fluid connection assembly shown in Figure 1A;
Figure 2 is an exploded perspective view of the fluid connection assembly shown in Figure 1A;
Figure 3 is a perspective view of the retainer shown in Figure 1A, in an unlocked state; and,
Figure 4 is a cross-sectional view of the fluid connection assembly taken generally along line 4-4 in Figure 1A.

### DETAILED DESCRIPTION

At the outset, it should be appreciated that like drawing numbers on different drawing views identify identical, or functionally similar, structural elements. It is to be understood that the claims are not limited to the disclosed aspects.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments. The assembly of the present disclosure could be driven by hydraulics, electronics, pneumatics, and/or springs.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification and claims. The term "approximately" is intended to mean values within ten percent of the specified value.

It should be understood that use of "or" in the present application is with respect to a "non-exclusive" arrangement, unless stated otherwise. For example, when saying that "item x is A or B," it is understood that this can mean one of the following: (1) item x is only one or the other of A and B; (2) item x is both A and B. Alternately stated, the word "or" is not used to define an "exclusive or" arrangement. For example, an "exclusive or" arrangement for the statement "item x is A or B" would require that x can be only one of A and B. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

Moreover, as used herein, the phrases "comprises at least one of" and "comprising at least one of" in combination with a system or element is intended to mean that the system or element includes one or more of the elements listed after the phrase. For example, a device comprising at least one of: a first element; a second element; and, a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element. A similar interpretation is intended when the phrase "used in at least one of:" is used herein. Furthermore, as used herein, "and/or" is intended to mean a grammatical conjunction used to indicate that one or more of the elements or conditions recited may be included or occur.

It should be appreciated that the term "tube" as used herein is synonymous with hose, pipe, channel, conduit, tube end form, or any other suitable pipe flow used in hydraulics and fluid mechanics. It should further be appreciated that the term "tube" can mean a rigid or flexible conduit of any material suitable for containing and allowing the flow of a gas or a liquid.

"Fully assembled locked state" as used herein refers to the fluid connection assembly and indicates that the tube is fully connected to the service valve body and the retainer is fully connected to the service valve body to retain the tube therein. "Partially assembled locked state" as used herein refers to the fluid connection assembly and indicates that the retainer is fully connected to the service valve body but the tube is not arranged in the service valve body or the retainer. The retainer may also be described as having a "locked state" or an "unlocked state," which indicates the state of the retainer independent of the service valve body and the tube.

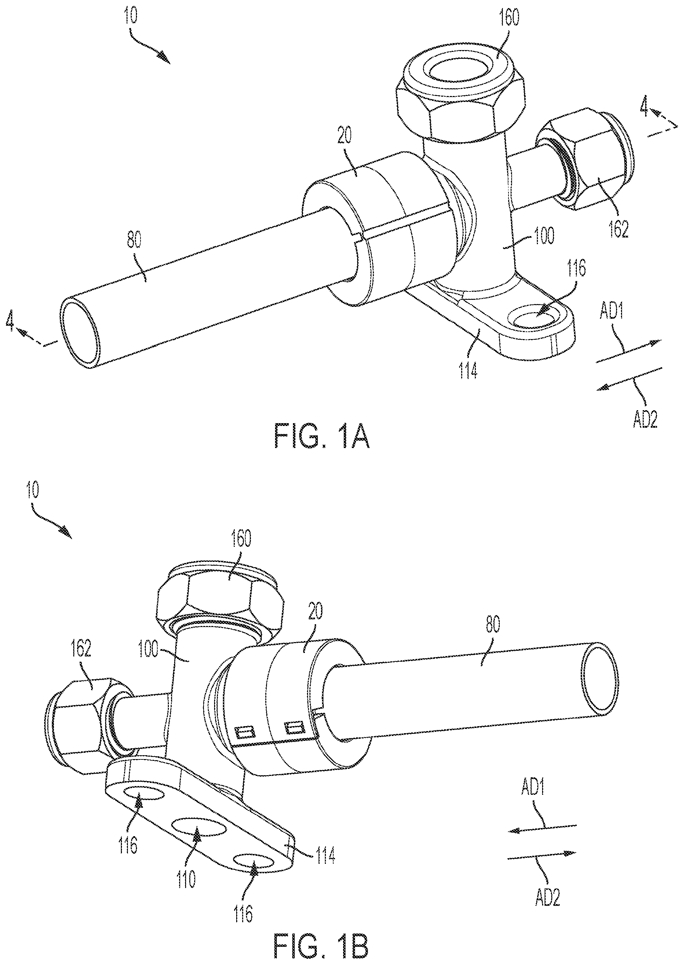

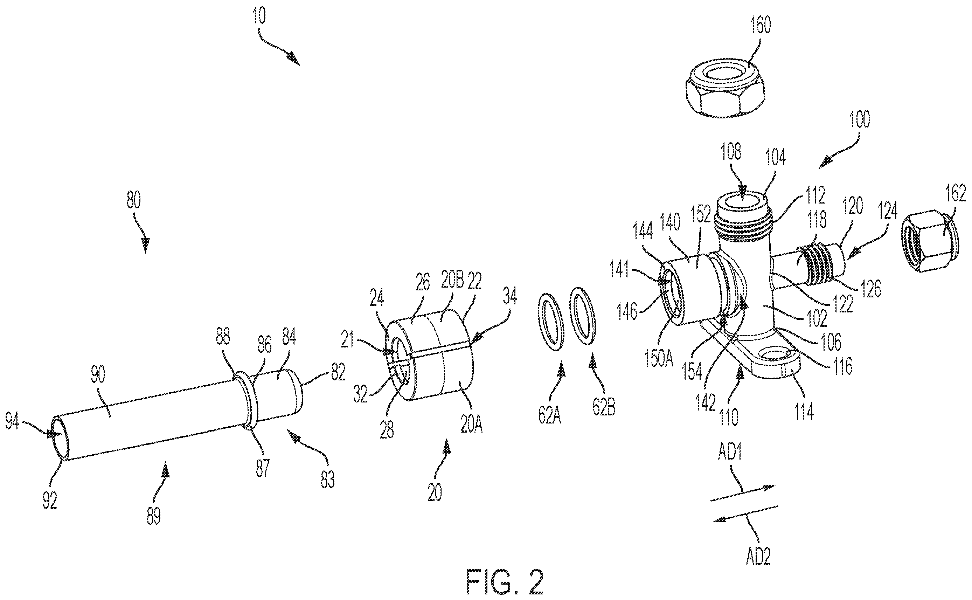

Adverting now to the figures, Figure 1A is a front perspective view of fluid connection assembly **10.** Figure 1B is a rear perspective view of fluid connection assembly **10.** Figure 2 is an exploded perspective view of fluid connection assembly **10.** Fluid connection assembly **10** generally comprises retainer **20,** tube **80,** and service valve body **100.** The following description should be read in view of Figures 1A-2.

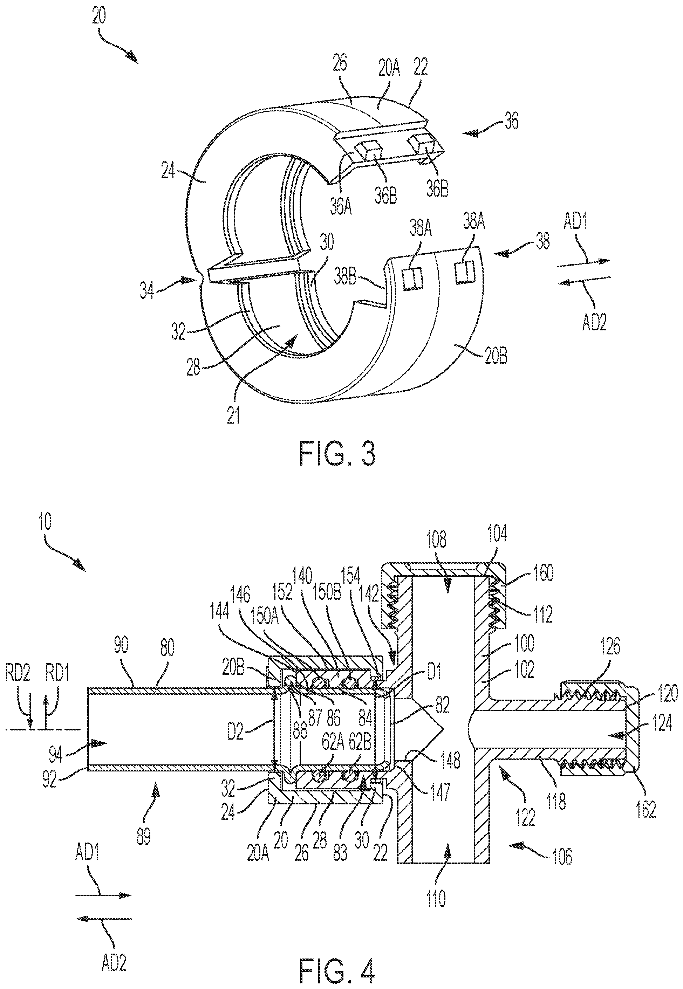

Tube **80** comprises end **82,** section **83,** bead or shoulder **87,** section **89,** end **82,** and through-bore **94.** Through-bore **94** extends through tube **80** from end **82** to end **92.** Section **83** is arranged between end **82** and shoulder **87** and comprises radially outward facing surface **84.** Radially outward facing surface **84** includes a substantially constant diameter. In some embodiments, radially outward facing surface **84** comprises a frusto-conical taper or curvilinear surface proximate end **82** (see Figure 4). Shoulder **87** is arranged between section **83** and section **89** and comprises surface **86** and surface **88.** In some embodiments, surface **86** is an axial surface facing at least partially in axial direction **AD1** and surface **88** is an axial surface facing at least partially in axial direction **AD2.** In some embodiments, surface **86** is a frusto-conical surface extending from the radially outward facing surface of shoulder **87** radially inward in axial direction **AD1.** For example, surface **86** may be a linear conical shape and increase in diameter in axial direction **AD2.** In some embodiments, surface **86** may comprise a linear portion and a conical or frusto-conical portion. Section **89** is arranged between shoulder **87** and end **92** and comprises radially outward facing surface **90.** Radially outward facing surface **90** includes a substantially constant diameter. Tube **80** is arranged to be inserted, specifically with end **82** first, into connector body **140.** Tube **80** is inserted into connector body **140** until section **83,** or radially outward facing surface **84,** engages seals **62A-B** (see Figure 4). Shoulder **87** engages end **144,** more specifically, surface **86** abuts against and/or engages end **144,** at which point retainer **20** is assembled to secure tube **80** to service valve body **100,** as will be described in greater detail below. It should be appreciated that tube **80** may be any traditional tube or tube end form comprising a bead, radially outward extending protrusion or flange, or ramp profile, which extends radially outward and axially on the outer surface of the tube, to secure the tube within the connector body. In some embodiments, tube **80** comprises a metal, a polymer, and/or a ceramic.

Figure 3 is a perspective view of retainer **20,** in an unlocked state. Retainer **20** is shown in Figures 1A-2 in a locked state. Figure 4 is a cross-sectional view of fluid connection assembly 10 taken generally along line **4-4** in Figure 1A. The following description should be read in view of Figures 1A-4.

Retainer **20** generally comprises section **20A,** section **20B,** end **22,** end **24,** hole **21** extending from end **22** to end **24,** radially outward facing surface **26,** and radially inward facing surface **28.** In some embodiments, section **20A** is hingedly connected to section **20B,** via, for example, hinge **34.** In some embodiments, hinge **34** is a living hinge. In some embodiments, section **20A** is removably connected to section **20B.** When sections **20A** and **20B** are connected or retainer **20** is in the locked state (Figures 1A-2), hole **21** is formed therebetween; however, it should be appreciated that even in the unlocked state (Figure 3), it could be said that each of sections **20A** and **20B** include a respective hole **21.**

Radially inward facing surface **28** extends from end **22** to end **24** and is operatively arranged to engage radially outward facing surface **152.** Radially inward facing surface **28** comprises flange **30** extending radially inward therefrom. In some embodiments, flange **30** is arranged immediately adjacent end **22.** Flange **30** is operatively arranged to engage groove **154** and radially inward facing surface **28** is operatively arranged to engage radially outward facing surface **152** to connect retainer **20** to connector body **140.** Flange **30** comprises diameter **D1.** Radially inward facing surface **28** further comprises flange **32** extending radially inward therefrom. In some embodiments, flange **32** is arranged immediately adjacent end **24.** Flange **32** is operatively arranged to engage shoulder **87** to connect tube **80** to connector body **140.** Flange **32** comprises diameter **D2.** In some embodiments, diameter **D1** is greater than diameter **D2.**

As best seen in Figure 4, flange **32** is spaced apart from flange **30** by a first distance. Groove **154** is spaced apart from end **144** by a second distance. Shoulder **87** comprises a width equal to a third distance. The first distance is substantially equal to the sum of the second distance and the third distance. This design results in, when retainer **20** is connected to connector body **140** and tube **80,** flange **32** abutting against surface **88,** as well as surface **86** abutting against end **144** (i.e., retainer **20** clamps shoulder **87** to end **144).** In some embodiments, the first distance is less than the sum of the second distance and the third distance. This results in shoulder **87** and connector body **140** being squeezed or clamped together. In some embodiments, the first distance is greater than the sum of the second distance and the third distance such that shoulder **87** is engaged or in close proximity with connector body **140.** Additionally, flange **30** comprises a first width and groove **154** comprises a second width, the second width being greater than the first width. As such, when retainer **20** is connected to connector body **140** without tube **80** arranged therein, retainer **20** is capable of sliding or displacing in axial direction **AD1** and axial direction **AD2** with respect to connector body **140.** When tube **80** is properly secured to connector body **140** by retainer **20,** retainer **20** is not capable of displacing in axial direction **AD1** and axial direction **AD2** with respect to connector body **140.** This feature provides an indicator as to the connection status of fluid connection assembly **10** and will be described in greater detail below. In some embodiments, the first width is substantially equal to the second width.

As previously described, flange **32** comprises diameter **D2,** which is less than the diameter of shoulder **87.** This design prevents shoulder **87** from being removed from connector body **140,** or tube **80** from displacing in axial direction **AD2** or rotating (i.e., bending moment) relative to connector body **140.** Tube **80** may still rotate in a circumferential direction with respect to connector body **140** and retainer **20.**

Section **20A** comprises male connector **36** and section **20B** comprises female connector **38.** As shown, male connector **36** on section **20A** is arranged to engage female connector **38** on section **20B** such that sections **20A** and **20B** are fixedly secured. In some embodiments, male connector **36** is hook-shaped (in a radially outward direction) and includes groove **36A** and one or more radially outward extending projections **36B.** Groove **36A** is arranged in radially outward facing surface **26.** Projections **36B** extend generally radially outward in radial direction **RD1** from groove **36A.** In some embodiments, projections **36B** comprise a tapered section near its radially outermost end operatively arranged to allow engagement of projections **36B** with female connector **38,** specifically, apertures **38A,** to occur with greater ease.

Female connector **38** comprises one or more apertures **38A** extending radially inward from radially outward facing surface **26.** Apertures **38A** are operatively arranged to engage projections **36B** to lock section **20B** to section **20A.** Female connector **38** further comprises recess **38B.** In some embodiments, recess **38B** is arranged in radially inward facing surface **28** (i.e., extends radially outward from radially inward facing surface **28).** As section **20B** is displaced toward section **20A,** female connector **38** engages projections **36B** and displaces radially outward in radial direction **RD1.** Once apertures **38A** are aligned with projections **36B,** female connector **38** snaps back radially inward, in radial direction **RD2,** thereby securing section **20B** to section **20A.**

Service valve body **100** generally comprises section or tube **102,** section or tube **118,** and connector body **140** to form a plurality of ports, for example, port **108,** port **110,** port **124,** and port **141.** Section **102,** section **118,** connector body **140** are connected such that all ports **108, 110, 124,** and **141** are in fluid communication. Section **102** comprises end **104** forming port **108** and end **110** forming port **110.** In some embodiments, and as shown, port **108** and port **110** are concentrically aligned. In some embodiments, port **108** is a service port and may comprise a valve stem or a stop collar (retainer) arranged therein. In some embodiments, section **102** comprises threading **112** on its radially outward facing surface proximate end **104.** In some embodiments, cap **160** is threadably engaged with threading **112** to seal port **108.** In some embodiments, port **110** is a middle port operatively arranged to be connected to a compressor or heat pump in a refrigeration system. In some embodiments, service valve body **100** comprises flange **114** connected to end **106.** Flange **114** may comprise one or more through-holes **116** operatively arranged to secure service valve body **100** to another component (e.g., a compressor). In some embodiments, port **108** comprises a first diameter and port **110** comprises a second diameter, the second diameter being equal to the first diameter. In some embodiments, port **108** comprises a first diameter and port **110** comprises a second diameter, the second diameter being nonequal to the first diameter.

Section **118** comprises end **122** connected to section **102** and end **120** forming port **124.** In some embodiments, port **124** may be a valve port and thus comprise a valve therein (e.g., a Schroeder valve). The valve in port **124** may control fluid flow within service valve body **100,** for example, between ports **108, 110,** and **141.** In some embodiments, section **118** comprises threading **126** on its radially outward facing surface proximate end **120.** In some embodiments, cap **162** is threadably engaged with threading **126** to seal port **124.** In some embodiments, and as shown, port **124** is concentrically aligned with port **141.** In some embodiments, section **118** is perpendicular to section **102.** In some embodiments, section **118** is non-perpendicular to section **102.** In some embodiments, port **124** comprises a first diameter and port **141** comprises a second diameter, the second diameter being greater than the first diameter. In some embodiments, port **124** comprises a first diameter and port **141** comprises a second diameter, the second diameter being less than or equal to the first diameter.

Connector body **140** comprises through-bore or port **141** extending from end **142** to end **144,** radially inward facing surface **146,** groove **150,** radially outward facing surface **152,** and groove **154.** End **142** is connected to section **102.** Connector body **140** is arranged to be connected to a component that is filled with a fluid or through which fluid flows. For example, connector body **140** may be connected to a refrigerant line (i.e., tube **80).** It should be appreciated that fluid connection assembly **10** may be used in various other components, assemblies, and subassemblies in which fluid connection is desired. Seals **162A-B** are arranged in connector body **140.** Specifically, seal **162A-B** are arranged in grooves **150A-B** to engage tube **80** (i.e., radially outward facing surface **84).** Grooves **150A-B** are arranged spaced apart axially in radially inward facing surface **146.** In some embodiments, seals **162A-B** are O-rings. In some embodiments, radially inward facing surface **146** is a substantially cylindrical surface. End **144** is operatively arranged to engage shoulder **87,** specifically, to prevent axial displacement of tube **80** is axial direction **AD1.** In some embodiments, and as shown, connector body **140** comprises radially inward facing surface **148,** which comprises a diameter that is less than the diameter of radially inward facing surface **146.** Radially inward facing surface **148** is connected radially inward facing surface **146** via surface **147.** In some embodiments, surface **147** is a substantially axial facing surface and faces axial direction **AD2.** In some embodiments, surface **147** acts as a stop or seat for tube **80** thereby preventing tube **80** from being displaced in axial direction **AD1** with respect to connector body **140.**

Groove **154** is arranged in radially outward facing surface **152.** Groove **154** is arranged axially between end **144** and end **142.** Groove **154** comprises a radially outward facing surface and two axial facing surfaces. The radially outward facing surface of groove **154** comprises a diameter that is less than the diameter of radially outward facing surface **152.** Groove **154** is operatively arranged to engage with flange **30** to connect retainer **20** to connector body **140.**

Groove **154** comprises a width that is greater than the width of flange **30.** In the partially assembled locked state, when retainer **20** is connected to connector body **140,** without tube **80** properly connected or present at all, flange **30** and thus retainer **20** is displaceable in axial direction **AD1** and axial direction **AD2** with respect to groove **154** and thus connector body **140** (i.e., flange **30** can slide back and forth within groove **154).** This provides an indication that fluid connection assembly **10** is not properly assembled. When retainer **20** is connected to connector body **140,** with tube **80** properly connected, flange **30** and thus retainer **20** is not displaceable (or is not displaceable as much) in axial direction **AD1** and axial direction **AD2** with respect to groove **154** and thus connector body **140** (i.e., flange **30** abuts against the left surface of groove **154** as shown in Figure 4). In some embodiments, connector body **140** is arranged perpendicular to section **102.** In some embodiments, connector body **140** is arranged non-perpendicular to section **102.** In some embodiments, connector body **140** comprises a metal, a polymer, and/or a ceramic.

To assemble fluid connection assembly **10,** tube **80** is inserted in axial direction **AD1,** with end **82** first, into connector body **140.** Radially outward facing surface **84** engages seals **62A-B** and section **83** is arranged inside of connector body **140** proximate radially inward facing surface **146.** Shoulder **87** engages end **144** of connector body **140,** specifically, surface **86** abuts against end **144.** In some embodiments, and as shown, shoulder **87** resides completely outside of connector body **140.** Then, retainer **20** is secured over both connector body **140** and tube **80.** Specifically, sections **20A** and **20B** are arranged over connector body **140** such that flange **30** is at least partially aligned with groove **154** and flange **32** is at least partially aligned with surface **88.** Sections **20A** and **20B** are displaced radially inward toward each other (i.e., in radial direction **RD2)** until female connector **38** fully engages male connector **36** and retainer **20** is in the locked state. Additionally, flange **32** engages tube **80,** specifically radially outward facing surface **90,** thereby preventing the ingress of foreign materials into fluid connection assembly **10.**

In the fully assembled locked state, flange **30** engages groove **154,** radially inward facing surface **28** engages radially outward facing surface **152** and flange **32** engages shoulder **87** of tube **80.** In some embodiments, in the fully assembled locked state, flange **30** abuts against the left surface of groove **154,** flange **32** abuts against surface **88,** and surface **86** abuts against end **144.** In some embodiments, in the fully assembled locked state, flange **30** abuts against the radially outward facing surface of groove **154,** thus preventing radial or circumferential displacement of retainer **20** with respect to connector body **140.** In some embodiments, flange **32** engages radially outward facing surface **90.** The engagement of tube **80** with connector body **140** prevents axial displacement of tube **80** in axial direction **AD1** and the engagement of retainer **20** with connector body **140** and tube **80** prevents axial displacement of tube **80** in axial direction **AD2,** as well as radial directions **RD1** and **RD2,** relative to connector body **140.**

To disassemble, female connector **38** is displaced radially outward in radial direction **RD1** with respect to male connector **36** until apertures **38A** disengages projections **36B.** Sections **20A** and **20B** are then separated to disengage flange **32** from shoulder **87,** at which point tube **80** can be removed from connector body **140.**

It will be appreciated that various aspects of the disclosure above and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

### LIST OF REFERENCE NUMERALS

- **10**: Fluid connection assembly
- **20**: Retainer
- **20A**: Section
- **20B**: Section
- **21**: Hole
- **22**: End
- **24**: End
- **26**: Radially outward facing surface
- **28**: Radially inward facing surface
- **30**: Flange
- **32**: Flange
- **34**: Hinge
- **36**: Male connector
- **36A**: Groove
- **36B**: Projection(s)
- **38**: Female connector
- **38A**: Aperture(s)
- **38B**: Recess
- **62A**: Seal
- **62B**: Seal
- **80**: Tube
- **82**: End
- **83**: Section
- **84**: Radially outward facing surface
- **86**: Surface
- **87**: Shoulder or bead
- **88**: Surface
- **89**: Section
- **90**: Radially outward facing surface
- **92**: End
- **94**: Through-bore
- **100**: Service valve body
- **102**: Section or tube
- **104**: End
- **106**: End
- **108**: Port or service port
- **110**: Port or middle port
- **112**: Threading
- **114**: Flange
- **116**: Hole(s)
- **118**: Section or tube
- **120**: End
- **122**: End
- **124**: Port or valve port
- **126**: Threading
- **140**: Connector body
- **141**: Port or line port
- **142**: End
- **144**: End
- **146**: Radially inward facing surface
- **147**: Axial surface or seat
- **148**: Radially inward facing surface
- **150A**: Groove
- **150B**: Groove
- **152**: Radially outward facing surface
- **154**: Groove
- **160**: Cap
- **162**: Cap
- **AD1**: Axial direction
- **AD2**: Axial direction
- **RD1**: Radial direction
- **RD2**: Radial direction
- **D1**: Diameter
- **D2**: Diameter

## Claims

1. A fluid connection assembly, comprising:
a service valve body (100), including:
a first section (102) forming a first port (108) and a second port (110);
a second section (118) connected to the first section (102) and forming a third port (124); and
a connector body (140) forming a fourth port (141) and comprising:
a first end (142) connected to the first section;
a second end (144);
a first radially outward facing surface (152) comprising an annular groove (154); and,
a first radially inward facing surface (146);
**characterized in that** the fluid connection assembly further comprises
a retainer (20) including:
a third end (22) operatively arranged to be removably connectable to the connector body;
a fourth end (124);
a first section (20A);
a second section (20B) displaceable with respect to the first section;
a second radially inward facing surface (28) comprising
a first flange (30) extending radially inward proximate the third end (22) and operatively arranged to engage the annular groove (154); and,
a second flange (32) extending radially inward proximate the fourth end (24); and,
a second radially outward facing surface (26).

2. The fluid connection assembly as recited in claim 1, wherein the first radially inward facing surface (152) comprises at least one annual groove (150A, 150B).

3. The fluid connection assembly as recited in claim 2, wherein the at least one annular groove (150A, 150B) comprises:
a first annular groove (150A); and
a second annular groove (150B) spaced apart in an axial direction from the first annular groove.

4. The fluid connection assembly as recited in claim 2, wherein a seal (62A, 62B) is arranged in the at least one annular groove (150A, 150B).

5. The fluid connection assembly as recited in claim 1, further comprising a third flange (114) fixedly secured to the first section (102) proximate the second port (110).

6. The fluid connection assembly as recited in claim 1, wherein:
the first flange (30) comprises a first diameter (D1);
the second flange (32) comprises a second diameter (D2); and
the first diameter is greater than the second diameter.

7. The fluid connection assembly as recited in claim 1, further comprising a tube (80) including a shoulder (87), wherein the second flange (32) is operatively arranged to engage the shoulder to secure the tube in the connector body (140).

8. The fluid connection assembly as recited in claim 1, wherein the first port (108) and the second port (110) are concentrically aligned.

9. The fluid connection assembly as recited in claim 1, wherein the third port (124) and the fourth port (141) are concentrically aligned.

10. The fluid connection assembly as recited in claim 1, wherein at least one of the second section (118) and the connector body (140) are arranged perpendicular to the first section (102).

11. The fluid connection assembly as recited in claim 1, wherein at least one of the first section (102) and the second section (118) comprises radially outward facing threading (112, 126).

12. The fluid connection assembly (10) as recited in claim 7, wherein the shoulder (87) resides completely outside of the connector body (140) when the tube (80) is secured to the connector body (140).

13. The fluid connection assembly (10) as recited in claim 7, wherein the shoulder (87) engages the second end (144) when the tube (80) is secured to the connector body (140).

14. The fluid connection assembly (10) as recited in claim 7, wherein the shoulder (87) abuts against the second end (144) when the tube (80) is secured to the connector body (140).

15. The fluid connection assembly (10) as recited in claim 5, wherein the third flange (114) comprises one or more through-holes operatively arranged to secure the service valve body (100) to another component.

## Patentansprüche

1. Fluidverbindungsanordnung, umfassend:
einen Serviceventilkörper (100), der enthält:
einen ersten Abschnitt (102), der einen ersten Anschluss (108) und einen zweiten Anschluss (110) bildet;
einen zweiten Abschnitt (118), der mit dem ersten Abschnitt (102) verbunden ist und einen dritten Anschluss (124) bildet; und
einen Verbinderkörper (140), der einen vierten Anschluss (141) bildet und umfasst:
ein erstes Ende (142), das mit dem ersten Abschnitt verbunden ist;
ein zweites Ende (144);
eine erste radial nach außen weisende Fläche (152), die eine Ringnut (154) umfasst; und
eine erste radial nach innen weisende Fläche (146);
**gekennzeichnet dadurch, dass** die Fluidverbindungsanordnung ferner umfasst:
einen Halter (20), der enthält:
ein drittes Ende (22), das betriebsmäßig dazu angeordnet ist, lösbar mit dem Verbinderkörper verbindbar zu sein;
ein viertes Ende (24);
einen ersten Abschnitt (20A);
einen zweiten Abschnitt (20B), der bezüglich des ersten Abschnitts verschiebbar ist;
eine zweite radial nach innen weisende Fläche (28), umfassend
einen ersten Flansch (30), der sich radial nach innen nahe dem dritten Ende (22) erstreckt und betriebsmäßig dazu angeordnet ist, mit der Ringnut (154) in Eingriff zu kommen; und
einen zweiten Flansch (32), der sich radial nach innen nahe dem vierten Ende (24) erstreckt; und
eine zweite radial nach außen weisende Fläche (26).

2. Fluidverbindungsanordnung nach Anspruch 1, wobei die erste radial nach innen weisende Fläche (152) mindestens eine Ringnut (150A, 150B) umfasst.

3. Fluidverbindungsanordnung nach Anspruch 2, wobei die mindestens eine Ringnut (150A, 150B) umfasst:
eine erste Ringnut (150A); und
eine zweite Ringnut (150B), die in einer axialen Richtung von der ersten Ringnut beabstandet ist.

4. Fluidverbindungsanordnung nach Anspruch 2, wobei eine Dichtung (62A, 62B) in der mindestens einen Ringnut (150A, 150B) angeordnet ist.

5. Fluidverbindungsanordnung nach Anspruch 1, ferner umfassend einen dritten Flansch (114), der an dem ersten Abschnitt (102) nahe dem zweiten Anschluss (110) fest gesichert ist.

6. Fluidverbindungsanordnung nach Anspruch 1, wobei:
der erste Flansch (30) einen ersten Durchmesser (D1) umfasst;
der zweite Flansch (32) einen zweiten Durchmesser (D2) umfasst; und
der erste Durchmesser größer ist als der zweite Durchmesser.

7. Fluidverbindungsanordnung nach Anspruch 1, ferner umfassend ein Rohr (80), das eine Schulter (87) beinhaltet, wobei der zweite Flansch (32) betriebsmäßig dazu angeordnet ist, mit der Schulter in Eingriff zu kommen, um das Rohr im Verbinderkörper (140) zu sichern

8. Fluidverbindungsanordnung nach Anspruch 1, wobei der erste Anschluss (108) und der zweite Anschluss (110) konzentrisch ausgerichtet sind.

9. Fluidverbindungsanordnung nach Anspruch 1, wobei der dritte Anschluss (124) und der vierte Anschluss (141) konzentrisch ausgerichtet sind.

10. Fluidverbindungsanordnung nach Anspruch 1, wobei der zweite Abschnitt (118) und/oder der Verbinderkörper (140) senkrecht zum ersten Abschnitt (102) angeordnet sind.

11. Fluidverbindungsanordnung nach Anspruch 1, wobei der erste Abschnitt (102) und/oder der zweiten Abschnitt (118) ein radial nach außen weisendes Gewinde (112, 126) umfassen.

12. Fluidverbindungsanordnung (10) nach Anspruch 7, wobei die Schulter (87) vollständig außerhalb des Verbinderkörpers (140) liegt, wenn das Rohr (80) am Verbinderkörper (140) gesichert ist

13. Fluidverbindungsanordnung (10) nach Anspruch 7, wobei die Schulter (87) mit dem zweiten Ende (144) in Eingriff kommt, wenn das Rohr (80) am Verbinderkörper (140) gesichert ist.

14. Fluidverbindungsanordnung (10) nach Anspruch 7, wobei die Schulter (87) gegen das zweite Ende (144) anliegt, wenn das Rohr (80) am Verbinderkörper (140) gesichert ist

15. Fluidverbindungsanordnung (10) nach Anspruch 5, wobei der dritte Flansch (114) eines oder mehrere Durchgangslöcher umfasst, die betriebsmäßig dazu angeordnet sind, den Serviceventilkörper (100) an einer anderen Komponente zu sichern.

## Revendications

1. Ensemble de connexion de fluide, comprenant :
un corps (100) de vanne de service, incluant :
une première section (102) formant un premier orifice (108) et un deuxième orifice (110) ;
une deuxième section (118) connectée à la première section (102) et formant un troisième orifice (124) ; et
un corps (140) de connecteur formant un quatrième orifice (141) et comprenant :
une première extrémité (142) connectée à la première section ;
une deuxième extrémité (144) ;
une première surface (152) faisant face radialement vers l'extérieur comprenant une rainure annulaire (154) ; et
une première surface (146) faisant face radialement vers l'intérieur ;
**caractérisé en ce que** l'ensemble de connexion de fluide comprend en outre
un dispositif (20) de retenue incluant :
une troisième extrémité (22) opérationnellement agencée pour être connectable de façon amovible au corps de connecteur ;
une quatrième extrémité (124) ;
une première section (20A) ;
une deuxième section (20B) déplaçable par rapport à la première section ;
une deuxième surface (28) faisant face radialement vers l'intérieur comprenant
une première bride (30) s'étendant radialement vers l'intérieur à proximité de la troisième extrémité (22) et opérationnellement agencée pour engager la rainure annulaire (154) ; et
une deuxième bride (32) s'étendant radialement vers l'intérieur à proximité de la quatrième extrémité (24) ; et
une deuxième surface (26) faisant face radialement vers l'extérieur.

2. Ensemble de connexion de fluide selon la revendication 1, dans lequel la première surface (152) faisant face radialement vers l'intérieur comprend au moins une rainure annulaire (150A, 150B).

3. Ensemble de connexion de fluide selon la revendication 2, dans lequel l'au moins une rainure annulaire (150A, 150B) comprend :
une première rainure annulaire (150A) ; et
une deuxième rainure annulaire (150B) espacée dans un sens axial de la première rainure annulaire.

4. Ensemble de connexion de fluide selon la revendication 2, dans lequel un joint (62A, 62B) est agencé dans l'au moins une rainure annulaire (150A, 150B).

5. Ensemble de connexion de fluide selon la revendication 1, comprenant en outre une troisième bride (114) fixée de façon fixe à la première section (102) à proximité du deuxième orifice (110).

6. Ensemble de connexion de fluide selon la revendication 1, dans lequel :
la première bride (30) comprend un premier diamètre (D1) ;
la deuxième bride (32) comprend un deuxième diamètre (D2) ; et
le premier diamètre est plus grand que le deuxième diamètre.

7. Ensemble de connexion de fluide selon la revendication 1, comprenant en outre un tube (80) incluant un épaulement (87), dans lequel la deuxième bride (32) est opérationnellement agencée pour engager l'épaulement pour fixer le tube dans le corps (140) de connecteur.

8. Ensemble de connexion de fluide selon la revendication 1, dans lequel le premier orifice (108) et le deuxième orifice (110) sont alignés concentriquement.

9. Ensemble de connexion de fluide selon la revendication 1, dans lequel le troisième orifice (124) et le quatrième orifice (141) sont alignés concentriquement.

10. Ensemble de connexion de fluide selon la revendication 1, dans lequel au moins un(e) parmi la deuxième section (118) et le corps (140) de connecteur sont agencés perpendiculaires à la première section (102).

11. Ensemble de connexion de fluide selon la revendication 1, dans lequel au moins une parmi la première section (102) et la deuxième section (118) comprend un filetage (112, 126) faisant face radialement vers l'extérieur.

12. Ensemble (10) de connexion de fluide selon la revendication 7, dans lequel l'épaulement (87) réside complètement à l'extérieur du corps (140) de connecteur lorsque le tube (80) est fixé au corps (140) de connecteur.

13. Ensemble (10) de connexion de fluide selon la revendication 7, dans lequel l'épaulement (87) engage la deuxième extrémité (144) lorsque le tube (80) est fixé au corps (140) de connecteur.

14. Ensemble (10) de connexion de fluide selon la revendication 7, dans lequel l'épaulement (87) bute contre la deuxième extrémité (144) lorsque le tube (80) est fixé au corps (140) de connecteur.

15. Ensemble (10) de connexion de fluide selon la revendication 5, dans lequel la troisième bride (114) comprend un trou traversant ou plus opérationnellement agencés pour fixer le corps (100) de vanne de service à un autre composant.
